# EUROPEAN PATENT APPLICATION

(11) **EP 4 180 956 A1**
(43) Date of publication of application: **17.05.2023**
(21) Application number: 22200128.1
(22) Date of filing: 06.10.2022
(51) Int. Cl.: G06F 9/50, G06F 9/48

(54) **VIRTUAL-MACHINE COLD MIGRATION METHOD AND APPARATUS, ELECTRONIC DEVICE AND STORAGE MEDIUM**

(30) Priority: 11.11.2021 CN 202111333311
(71) Applicant: BEIJING BAIDU NETCOM SCIENCE TECHNOLOGY CO., LTD., Beijing 100085 (CN)
(72) Inventor: ZHANG, Peng, Beijing, 100085 (CN); HE, Fangshi, Beijing, 100085 (CN); JIAO, Jianfeng, Beijing, 100085 (CN); HAN, Ding, Beijing, 100085 (CN)
(74) Representative: dompatent von Kreisler Selting Werner - Partnerschaft von Patent- und Rechtsanwälten mbB

(57) **Abstract**

The present disclosure provides a virtual-machine cold migration method and apparatus, an electronic device and a storage medium, and relates to the field of artificial intelligence, such as cloud computing, distributed storage, or the like. The method may include: selecting a node as a target physical machine from nodes of a cluster where a to-be-migrated virtual machine is located, the target physical machine and a source physical machine where the virtual machine is located being different nodes; and migrating, by means of point-to-point data transmission, system disk data and data disk data in the virtual machine from the source physical machine to the target physical machine to obtain a migrated virtual machine, and deleting the virtual machine on the source physical machine. The application of the solution of the present disclosure may save labor and time costs as well as storage resources, or the like.

## Description

### TECHNICAL FIELD

The present disclosure relates to the field of artificial intelligence technologies, and particularly to fields of cloud computing, distributed storage, or the like, and more particularly to a virtual-machine cold migration method and apparatus, an electronic device and a storage medium.

### BACKGROUND

In a cloud native scenario, virtual machines basically run on physical machines as carriers in an independent individual form. For some reason, such as a physical-machine disk failure, a network failure, a hacker attack, or the like, the virtual machine running on the physical machine may be in an unsafe or unstable running state. To solve this problem, usually, the virtual machine is required to be subjected to cold migration.

A traditional cold migration method includes: determining a target physical machine; exporting data required to be migrated from a source physical machine; networking the target physical machine and the source physical machine; migrating the data required to be migrated to the target physical machine, and then importing the data to a target virtual machine (i.e., a migrated virtual machine); starting the target virtual machine; deleting a source virtual machine, or the like. However, much manual intervention is required in an implementation process of this method, such that great labor and time costs are required, and an efficiency is low; moreover, a temporary storage space is required to store the data when the data is exported and imported, thereby occupying more storage resources, or the like.

### SUMMARY

The present disclosure provides a virtual-machine cold migration method and apparatus, an electronic device and a storage medium.

A virtual-machine cold migration method, includes:
selecting a node as a target physical machine from nodes of a cluster where a to-be-migrated virtual machine is located, the target physical machine and a source physical machine where the virtual machine is located being different nodes; and
migrating, by means of point-to-point data transmission, system disk data and data disk data in the virtual machine from the source physical machine to the target physical machine to obtain a migrated virtual machine, and deleting the virtual machine on the source physical machine.

A virtual-machine cold migration apparatus, includes:
a node selecting module configured to select a node as a target physical machine from nodes of a cluster where a to-be-migrated virtual machine is located, the target physical machine and a source physical machine where the virtual machine is located being different nodes; and
a data migrating module configured to migrate, by means of point-to-point data transmission, system disk data and data disk data in the virtual machine from the source physical machine to the target physical machine to obtain a migrated virtual machine, and deleting the virtual machine on the source physical machine.

An electronic device includes:
at least one processor; and
a memory connected with the at least one processor communicatively;
where the memory stores instructions executable by the at least one processor to enable the at least one processor to perform the method as mentioned above.

There is provided a non-transitory computer readable storage medium with computer instructions stored thereon, where the computer instructions are used for causing a computer to perform the method as mentioned above.

A computer program product includes a computer program/instruction, when executed by a processor, implements the method as mentioned above.

One embodiment in the above disclosure has the following advantages or beneficial effects: a whole cold migration process may be completed automatically without manual intervention, thereby saving labor and time costs, and improving a processing efficiency; in addition, depending on network intercommunity of different nodes in the same cluster, point-to-point data transmission may be realized without a temporary storage space, thereby saving storage resources, or the like.

It should be understood that the statements in this section are not intended to identify key or critical features of the embodiments of the present disclosure, nor limit the scope of the present disclosure. Other features of the present disclosure will become apparent from the following description.

### BRIEF DESCRIPTION OF THE DRAWINGS

The drawings are used for better understanding the present solution and do not constitute a limitation of the present disclosure. In the drawings,
Fig. 1 is a flow chart of a virtual-machine cold migration method according to an embodiment of the present disclosure;
Fig. 2 is a schematic diagram of a process of selecting a node as a target physical machine from nodes of a cluster according to the present disclosure;
Fig. 3 is a schematic diagram of a transmission manner of system disk data and data disk data according to the present disclosure;
Fig. 4 is a schematic structural diagram of a virtual-machine cold migration apparatus 400 according to an embodiment of the present disclosure; and
Fig. 5 shows a schematic block diagram of an electronic device 500 which may be configured to implement the embodiment of the present disclosure.

### DETAILED DESCRIPTION

The following part will illustrate exemplary embodiments of the present disclosure with reference to the drawings, including various details of the embodiments of the present disclosure for a better understanding. The embodiments should be regarded only as exemplary ones. Therefore, those skilled in the art should appreciate that various changes or modifications can be made with respect to the embodiments described herein without departing from the scope and spirit of the present disclosure. Similarly, for clarity and conciseness, the descriptions of the known functions and structures are omitted in the descriptions below.

In addition, it should be understood that the term "and/or" only describes an association relationship between associated objects, and indicates that three relationships may exist. For example, A and/or B may indicate three cases: only A exists; both A and B exist; and only B exists. In addition, in this specification, the symbol "/" generally indicates that associated objects have a relationship of "or".

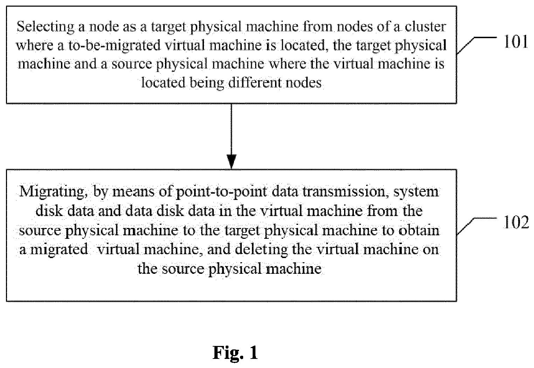

Fig. 1 is a flow chart of a virtual-machine cold migration method according to an embodiment of the present disclosure. As shown in Fig. 1, the method includes the following implementation steps:
step 101: selecting a node as a target physical machine from nodes of a cluster where a to-be-migrated virtual machine is located, the target physical machine and a source physical machine where the virtual machine is located being different nodes; and
step 102: migrating, by means of point-to-point data transmission, system disk data and data disk data in the virtual machine from the source physical machine to the target physical machine to obtain a migrated virtual machine, and deleting the virtual machine on the source physical machine.

From the above-mentioned solution of the method embodiment, a whole cold migration process may be completed automatically without manual intervention, thereby saving labor and time costs, and improving a processing efficiency; in addition, depending on network intercommunity of different nodes in the same cluster, point-to-point data transmission may be realized without a temporary storage space, thereby saving storage resources, or the like.

The cluster may be a Kubemetes cluster, and Kubemetes may be called K8s for short, is a portable and extensible open source platform, is configured to manage containerized workloads and services, and may facilitate declarative configuration and automation.

In practical applications, if some physical machine has a failure, such as a disk failure or a network failure, or the like, hardware repair or system reinstallation, or the like, is required to be performed on the physical machine, and correspondingly, the virtual machine running on the physical machine is in an unsafe or unstable running state, and may be subjected to cold migration, and cold migration means that a powered-off or suspended virtual machine is migrated to a new host machine (i.e., a new physical machine).

The node as the target physical machine may be selected from the nodes of the cluster where the to-be-migrated virtual machine is located, and the target physical machine and the source physical machine where the virtual machine is located are different nodes.

In one embodiment of the present disclosure, for the to-be-migrated virtual machine, the source physical machine and nodes which cannot meet a resource configuration requirement of the virtual machine may be filtered out from the nodes in the cluster, remaining nodes may be used as candidate nodes, and then, one node may be selected from the candidate nodes as the target physical machine.

The nodes which cannot meet the resource configuration requirement of the virtual machine refer to nodes with available resources insufficient to carry the virtual machine. After the source physical machine and the nodes which cannot meet the resource configuration requirement of the virtual machine are filtered out, the remaining nodes may be used as the candidate nodes, and usually, a number of the candidate nodes is greater than one, and then, one node may be selected from the candidate nodes as the required target physical machine.

With the above processing operations, the selected target physical machine may be ensured to be an available physical machine capable of bearing the to-be-migrated virtual machine, thereby guaranteeing normal work of the migrated virtual machine, or the like.

In one embodiment of the present disclosure, one node with an optimal comprehensive performance may be selected from the candidate nodes as the target physical machine.

A method for determining the node with the optimal comprehensive performance is not limited. For example, each candidate node may be scored from multiple predetermined different dimensions, weighted addition may be performed on the scores, a result of weighted addition may be used as a comprehensive score of the candidate node, and then, the candidate node with the highest comprehensive score is taken as the node with the optimal comprehensive performance, i.e., the target physical machine. The multiple different dimensions may be specifically determined according to actual requirements.

With the above processing operations, the node with the optimal comprehensive performance may be selected as the target physical machine, thereby providing an optimal running environment for the migrated virtual machine, and realizing load balance among the nodes, or the like.

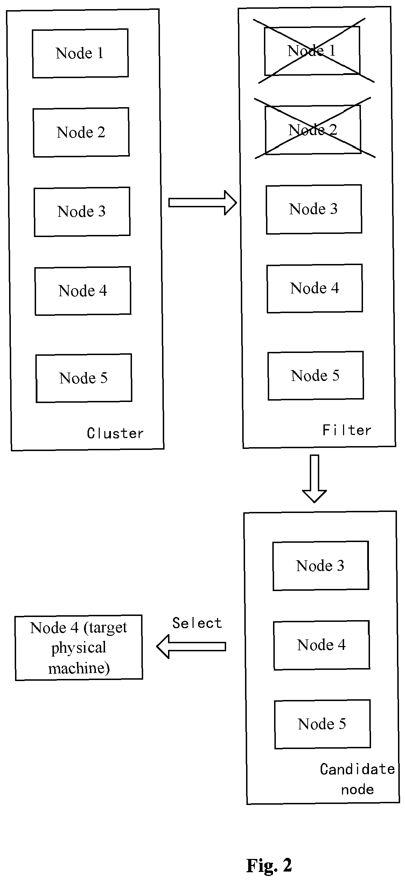

Based on the above description, Fig. 2 is a schematic diagram of a process of selecting the node as the target physical machine from the nodes of the cluster according to the present disclosure.

As shown in Fig. 2, it is assumed that there exist 5 (for example only, an actual number may be much greater than this number) nodes in the cluster, which are node 1, node 2, node 3, node 4 and node 5 respectively, and node 1 is the physical machine where the to-be-migrated virtual machine is located, i.e., the source physical machine, and node 2 is a node which cannot meet the resource configuration requirement of the virtual machine, node 1 and node 2 may be filtered out, remaining nodes 3, 4 and 5 may be used as candidate nodes, and then, comprehensive scores of the candidate nodes are acquired, and the comprehensive score with a largest value is selected from the acquired 3 comprehensive scores, and assuming that the node corresponding to the comprehensive score with the largest value is node 4, node 4 may be used as the selected target physical machine.

After the target physical machine is determined, by means of point-to-point data transmission, the system disk data and the data disk data in the to-be-migrated virtual machine may be migrated from the source physical machine to the target physical machine to obtain the migrated virtual machine.

In one embodiment of the present disclosure, the system disk data in the to-be-migrated virtual machine is migrated from the source physical machine to the target physical machine by: creating a source system pod running on the source physical machine, mounting a source system disk in the source system pod, creating a target system pod running on the target physical machine, mounting a target system disk in the target system pod, using the source system pod and the target system pod as a data sender and a data receiver respectively, and transmitting the system disk data of the virtual machine from the source system disk to the target system disk. The configuration of the target system pod may be consistent with the configuration of the to-be-migrated virtual machine.

In a traditional cold migration method, intercommunication between the source physical machine and the target physical machine is required to be made in advance, thereby increasing implementation complexity, or the like; using the method according to the present disclosure, intercommunication between the nodes is not required, and depending on network intercommunity of different nodes in the same cluster, point-to-point data transmission may be realized directly, thereby reducing the implementation complexity; the temporary storage space is not required, thereby saving the storage resources, or the like.

In one embodiment of the present disclosure, a data transmission manner between the data sender and the data receiver may include: a hypertext transfer protocol (HTTP) transmission manner, and one or all of the following mechanisms may be adopted: an authentication and verification mechanism before data transmission and an error retry mechanism in the data transmission process.

In practical applications, the source system pod may have an HTTP service started to serve as a client, i.e., the data sender, and the target system pod may have an HTTP service started to serve as a server, i.e., the data receiver; after the source system pod and the target system pod are ready, HTTP data transmission may be performed; that is, the system disk data of the to-be-migrated virtual machine is transmitted to the target system disk from the source system disk.

Before data transmission, authentication and verification may also be performed, and in the data transmission process, if errors occur, a retry may be performed, thereby guaranteeing reliability, integrity, safety, or the like, of the data transmission of the virtual machine.

In addition to the above operations, some other processing operations may be performed, and these processing operations are not specifically limited. For example, a transmission index may be exposed by metrics for a related monitoring assembly to monitor data transmission progress, or the like.

After the system disk data is transmitted, the source system pod and the target system pod may exit.

In one embodiment of the present disclosure, when the data disk data in the to-be-migrated virtual machine is migrated from the source physical machine to the target physical machine, any data disk in the virtual machine may be processed by: creating a source data pod running on the source physical machine, mounting a source data disk in the source data pod, creating a target data pod running on the target physical machine, mounting a target data disk in the target data pod, using the source data pod and the target data pod as a data sender and a data receiver respectively, and transmitting the data disk data from the source data disk to the target data disk.

In one embodiment of the present disclosure, a data transmission manner between the data sender and the data receiver may include: a HTTP transmission manner, and one or all of the following mechanisms may be adopted: an authentication and verification mechanism before data transmission and an error retry mechanism in the data transmission process.

After the data of any data disk is transmitted, the source data pod and the target data pod may exit.

It may be seen that the transmission manner of the data disk data is similar to that of the system disk data, and is not repeated herein.

Usually, there is one system disk, and there may be one or more data disks; if there are multiple data disks, the multiple data disks may be processed in series, that is, sequentially processed according to the above manner in a predetermined order; or, the data disks may be processed in parallel, that is, simultaneously processed according to the above manner, and the specific manner is not limited.

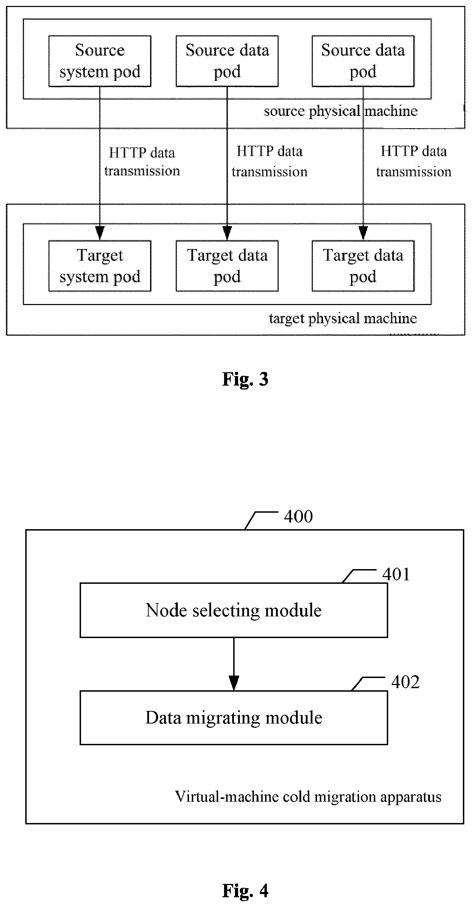

In summary, Fig. 3 is a schematic diagram of the transmission manner of the system disk data and the data disk data according to the present disclosure. As shown in Fig. 3, assuming that there exist two data disks and one system disk, and data may be transmitted in the HTTP manner, and in addition, usually, data transmission of the system disk may be performed first, and then, data transmission of the two data disks may be performed sequentially.

After both the system disk data and the data disk data are transmitted, the migrated virtual machine located on the target physical machine may be obtained.

In one embodiment of the present disclosure, migration progress information of the cold migration process may be acquired and displayed in real time, such that development, operation and maintenance persons may conveniently and intuitively know a migration progress condition.

In addition, after migration is completed, the migrated virtual machine located on the target physical machine may be turned on/started, and the virtual machine before migration located on the source physical machine may be deleted, such that the virtual machines before and after migration are completely consistent, and resource residue leakage, or the like, may be avoided.

It should be noted that for simplicity of description, the above-mentioned embodiment of the method is described as combinations of a series of acts, but those skilled in the art should understand that the present disclosure is not limited by the described order of acts, as some steps may be performed in other orders or simultaneously according to the present disclosure. Further, those skilled in the art should also understand that the embodiments described in this specification are exemplary embodiments and that acts and modules referred to are not necessary for the present disclosure.

The above is a description of an embodiment of the method, and an embodiment of an apparatus according to the present disclosure will be further described below.

Fig. 4 is a schematic structural diagram of a virtual-machine cold migration apparatus 400 according to an embodiment of the present disclosure. As shown in Fig. 4, the apparatus includes:
a node selecting module 401 configured to select a node as a target physical machine from nodes of a cluster where a to-be-migrated virtual machine is located, the target physical machine and a source physical machine where the virtual machine is located being different nodes; and
a data migrating module 402 configured to migrate, by means of point-to-point data transmission, system disk data and data disk data in the virtual machine from the source physical machine to the target physical machine to obtain a migrated virtual machine, and deleting the virtual machine on the source physical machine.

In practical applications, if some physical machine has a failure, such as a disk failure or a network failure, or the like, hardware repair or system reinstallation, or the like, is required to be performed on the physical machine, and correspondingly, the virtual machine running on the physical machine is in an unsafe or unstable running state, and may be subjected to cold migration.

The node selecting module 401 may select the node as the target physical machine from the nodes of the cluster where the to-be-migrated virtual machine is located, and the target physical machine and the source physical machine where the virtual machine is located are different nodes.

In one embodiment of the present disclosure, for the to-be-migrated virtual machine, the node selecting module 401 may filter out the source physical machine and nodes which cannot meet a resource configuration requirement of the virtual machine from the nodes in the cluster, use remaining nodes as candidate nodes, and then select one node from the candidate nodes as the target physical machine.

The nodes which cannot meet the resource configuration requirement of the virtual machine refer to nodes with available resources insufficient to carry the virtual machine. After the source physical machine and the nodes which cannot meet the resource configuration requirement of the virtual machine are filtered out, the remaining nodes may be used as the candidate nodes, and usually, a number of the candidate nodes is greater than one, and then, one node may be selected from the candidate nodes as the required target physical machine.

In one embodiment of the present disclosure, the node selecting module 401 may select one node with an optimal comprehensive performance from the candidate nodes as the target physical machine.

A method for determining the node with the optimal comprehensive performance is not limited. For example, each candidate node may be scored from multiple predetermined different dimensions, weighted addition may be performed on the scores, a result of weighted addition may be used as a comprehensive score of the candidate node, and then, the candidate node with the highest comprehensive score is taken as the node with the optimal comprehensive performance, i.e., the target physical machine. The multiple different dimensions may be specifically determined according to actual requirements.

After the target physical machine is determined, the data migrating module 402 may migrate, by means of point-to-point data transmission, the system disk data and the data disk data in the to-be-migrated virtual machine from the source physical machine to the target physical machine to obtain the migrated virtual machine.

In one embodiment of the present disclosure, the data migrating module 402 may migrate the system disk data in the to-be-migrated virtual machine from the source physical machine to the target physical machine by: creating a source system pod running on the source physical machine, mounting a source system disk in the source system pod, creating a target system pod running on the target physical machine, mounting a target system disk in the target system pod, using the source system pod and the target system pod as a data sender and a data receiver respectively, and transmitting the system disk data of the virtual machine from the source system disk to the target system disk.

In one embodiment of the present disclosure, when migrating the data disk data in the to-be-migrated virtual machine from the source physical machine to the target physical machine, the data migrating module 402 may process any data disk in the virtual machine by: creating a source data pod running on the source physical machine, mounting a source data disk in the source data pod, creating a target data pod running on the target physical machine, mounting a target data disk in the target data pod, using the source data pod and the target data pod as a data sender and a data receiver respectively, and transmitting the data disk data from the source data disk to the target data disk.

In addition, in one embodiment of the present disclosure, a data transmission manner between the data sender and the data receiver may include: a HTTP transmission manner, and one or all of the following mechanisms may be adopted: an authentication and verification mechanism before data transmission and an error retry mechanism in the data transmission process.

Usually, there is one system disk, and there may be one or more data disks; if there are multiple data disks, the multiple data disks may be processed in series, that is, sequentially processed according to the above manner in a predetermined order; or, the data disks may be processed in parallel, that is, simultaneously processed according to the above manner.

In one embodiment of the present disclosure, the data migrating module 402 may further acquire and display migration progress information of the cold migration process in real time, such that development, operation and maintenance persons may conveniently and intuitively know a migration progress condition.

For the specific work flow of the embodiment of the apparatus shown in Fig. 4, reference is made to the related description in the foregoing embodiment of the method, and details are not repeated.

In summary, with the solution of the apparatus according to the embodiment of the present disclosure, a whole cold migration process may be completed automatically without manual intervention, thereby saving labor and time costs, and improving a processing efficiency; moreover, depending on network intercommunity of different nodes in the same cluster, point-to-point data transmission may be realized without a temporary storage space, thereby saving storage resources, or the like; in addition, reliability, integrity, safety, or the like, of the data transmission of the virtual machine are guaranteed.

The solution of the present disclosure may be applied to the field of artificial intelligence, and particularly relates to the fields of cloud computing, distributed storage, or the like. Artificial intelligence is a subject of researching how to cause a computer to simulate certain thought processes and intelligent behaviors (for example, learning, inferring, thinking, planning, or the like) of a human, and includes both hardware-level technologies and software-level technologies. Generally, the hardware technologies of the artificial intelligence include technologies, such as a sensor, a dedicated artificial intelligence chip, cloud computing, distributed storage, big data processing, or the like; the software technologies of the artificial intelligence mainly include a computer vision technology, a voice recognition technology, a natural language processing technology, a machine learning/deep learning technology, a big data processing technology, a knowledge graph technology, or the like.

In the technical solution of the present disclosure, the collection, storage, usage, processing, transmission, provision, disclosure, or the like, of involved user personal information are in compliance with relevant laws and regulations, and do not violate public order and good customs.

According to the embodiment of the present disclosure, there are also provided an electronic device, a readable storage medium and a computer program product.

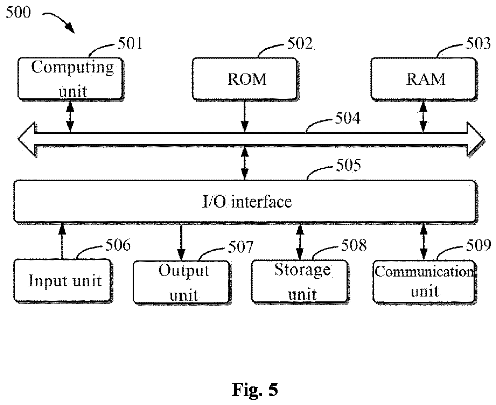

Fig. 5 shows a schematic block diagram of an electronic device 500 which may be configured to implement the embodiment of the present disclosure. The electronic device is intended to represent various forms of digital computers, such as laptop computers, desktop computers, workstations, servers, blade servers, mainframe computers, and other appropriate computers. The electronic device may also represent various forms of mobile apparatuses, such as personal digital assistants, cellular telephones, smart phones, wearable devices, and other similar computing apparatuses. The components shown herein, their connections and relationships, and their functions, are meant to be exemplary only, and are not meant to limit implementation of the present disclosure described and/or claimed herein.

As shown in Fig. 5, the device 500 includes a computing unit 501 which may perform various appropriate actions and processing operations according to a computer program stored in a read only memory (ROM) 502 or a computer program loaded from a storage unit 508 into a random access memory (RAM) 503. Various programs and data necessary for the operation of the device 500 may be also stored in the RAM 503. The computing unit 501, the ROM 502, and the RAM 503 are connected with one other through a bus 504. An input/output (I/O) interface 505 is also connected to the bus 504.

The multiple components in the device 500 are connected to the I/O interface 505, and include: an input unit 506, such as a keyboard, a mouse, or the like; an output unit 507, such as various types of displays, speakers, or the like; the storage unit 508, such as a magnetic disk, an optical disk, or the like; and a communication unit 509, such as a network card, a modem, a wireless communication transceiver, or the like. The communication unit 509 allows the device 500 to exchange information/data with other devices through a computer network, such as the Internet, and/or various telecommunication networks.

The computing unit 501 may be a variety of general and/or special purpose processing components with processing and computing capabilities. Some examples of the computing unit 501 include, but are not limited to, a central processing unit (CPU), a graphic processing unit (GPU), various dedicated artificial intelligence (AI) computing chips, various computing units running machine learning model algorithms, a digital signal processor (DSP), and any suitable processor, controller, microcontroller, or the like. The computing unit 501 performs the methods and processing operations described above, such as the method according to the present disclosure. For example, in some embodiments, the method according to the present disclosure may be implemented as a computer software program tangibly contained in a machine readable medium, such as the storage unit 508. In some embodiments, part or all of the computer program may be loaded and/or installed into the device 500 via the ROM 502 and/or the communication unit 509. When the computer program is loaded into the RAM 503 and executed by the computing unit 501, one or more steps of the method according to the present disclosure may be performed. Alternatively, in other embodiments, the computing unit 501 may be configured to perform the method according to the present disclosure by any other suitable means (for example, by means of firmware).

Various implementations of the systems and technologies described herein above may be implemented in digital electronic circuitry, integrated circuitry, field programmable gate arrays (FPGA), application specific integrated circuits (ASIC), application specific standard products (ASSP), systems on chips (SOC), complex programmable logic devices (CPLD), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmit data and instructions to, a storage system, at least one input apparatus, and at least one output apparatus.

Program codes for implementing the method according to the present disclosure may be written in any combination of one or more programming languages. These program codes may be provided to a processor or a controller of a general purpose computer, a special purpose computer, or other programmable data processing apparatuses, such that the program code, when executed by the processor or the controller, causes functions/operations specified in the flowchart and/or the block diagram to be implemented. The program code may be executed entirely on a machine, partly on a machine, partly on a machine as a stand-alone software package and partly on a remote machine, or entirely on a remote machine or a server.

In the context of the present disclosure, the machine readable medium may be a tangible medium which may contain or store a program for use by or in connection with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, a portable computer disk, a hard disk, a random access memory (RAM), a read only memory (ROM), an erasable programmable read only memory (EPROM or flash memory), an optical fiber, a portable compact disc read only memory (CD-ROM), an optical storage device, a magnetic storage device, or any suitable combination of the foregoing.

To provide interaction with a user, the systems and technologies described here may be implemented on a computer having: a display apparatus (for example, a cathode ray tube (CRT) or liquid crystal display (LCD) monitor) for displaying information to a user; and a keyboard and a pointing apparatus (for example, a mouse or a trackball) by which a user may provide input for the computer. Other kinds of apparatuses may also be used to provide interaction with a user; for example, feedback provided for a user may be any form of sensory feedback (for example, visual feedback, auditory feedback, or tactile feedback); and input from a user may be received in any form (including acoustic, speech or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN) and the Internet.

A computer system may include a client and a server. Generally, the client and the server are remote from each other and interact through the communication network. The relationship between the client and the server is generated by virtue of computer programs which run on respective computers and have a client-server relationship to each other. The server may be a cloud server or a server of a distributed system, or a server incorporating a blockchain.

It should be understood that various forms of the flows shown above may be used and reordered, and steps may be added or deleted. For example, the steps described in the present disclosure may be executed in parallel, sequentially, or in different orders, which is not limited herein as long as the desired results of the technical solution disclosed in the present disclosure may be achieved.

The above-mentioned implementations are not intended to limit the scope of the present disclosure. It should be understood by those skilled in the art that various modifications, combinations, sub-combinations and substitutions may be made, depending on design requirements and other factors. Any modification, equivalent substitution and improvement made within the spirit and principle of the present disclosure all should be included in the extent of protection of the present disclosure.

## Claims

1. A computer-implemented virtual-machine cold migration method, comprising:
selecting (101) a node as a target physical machine from nodes of a cluster where a to-be-migrated virtual machine is located, the target physical machine and a source physical machine where the virtual machine is located being different nodes; and
migrating (102), by means of point-to-point data transmission, system disk data and data disk data in the virtual machine from the source physical machine to the target physical machine to obtain a migrated virtual machine, and deleting the virtual machine on the source physical machine.

2. The method according to claim 1, wherein the selecting the node as the target physical machine from nodes of the cluster where the to-be-migrated virtual machine is located comprises:
filtering out the source physical machine and nodes which cannot meet a resource configuration requirement of the virtual machine from the nodes in the cluster, using remaining nodes as candidate nodes, and selecting one node from the candidate nodes as the target physical machine.

3. The method according to claim 2, wherein the selecting one node from the candidate nodes as the target physical machine comprises:
selecting one node with an optimal comprehensive performance from the candidate nodes as the target physical machine.

4. The method according to any one of claims 1 to 3, wherein the migrating system disk data in the virtual machine from the source physical machine to the target physical machine comprises:
creating a source system pod running on the source physical machine, and mounting a source system disk in the source system pod;
creating a target system pod running on the target physical machine, and mounting a target system disk in the target system pod; and
using the source system pod and the target system pod as a data sender and a data receiver respectively, and transmitting the system disk data from the source system disk to the target system disk.

5. The method according to any one of claims 1 to 4, wherein the migrating data disk data in the virtual machine from the source physical machine to the target physical machine comprises:
processing any data disk in the virtual machine by:
creating a source data pod running on the source physical machine, and mounting a source data disk in the source data pod;
creating a target data pod running on the target physical machine, and mounting a target data disk in the target data pod; and
using the source data pod and the target data pod as a data sender and a data receiver respectively, and transmitting the data disk data from the source data disk to the target data disk.

6. The method according to claim 4 or 5, wherein the data sender and the data receiver use a data transmission manner of a hypertext transfer protocol transmission manner therebetween, and use at least one of the following mechanisms: an authentication and verification mechanism before data transmission and an error retry mechanism in the data transmission process.

7. The method according to any one of claims 1 to 6, further comprising: acquiring and displaying migration progress information of the cold migration process in real time.

8. A virtual-machine cold migration apparatus (400), comprising:
a node selecting module (401) configured to select (101) a node as a target physical machine from nodes of a cluster where a to-be-migrated virtual machine is located, the target physical machine and a source physical machine where the virtual machine is located being different nodes; and
a data migrating module (402) configured to migrate (102), by means of point-to-point data transmission, system disk data and data disk data in the virtual machine from the source physical machine to the target physical machine to obtain a migrated virtual machine, and deleting the virtual machine on the source physical machine.

9. The apparatus according to claim 8, wherein the node selecting module (401) filters out the source physical machine and nodes which cannot meet a resource configuration requirement of the virtual machine from the nodes in the cluster, uses remaining nodes as candidate nodes, and selects one node from the candidate nodes as the target physical machine.

10. The apparatus according to claim 9, wherein the node selecting module (401) selects one node with an optimal comprehensive performance from the candidate nodes as the target physical machine.

11. The apparatus according to any one of claims 8 to 10, wherein the data migrating module (402) creates a source system pod running on the source physical machine, mounts a source system disk in the source system pod, creates a target system pod running on the target physical machine, mounts a target system disk in the target system pod, uses the source system pod and the target system pod as a data sender and a data receiver respectively, and transmits the system disk data from the source system disk to the target system disk.

12. The apparatus according to any one of claims 8 to 11, wherein the data migrating module (402) processes any data disk in the virtual machine by: creating a source data pod running on the source physical machine, mounting a source data disk in the source data pod, creating a target data pod running on the target physical machine, mounting a target data disk in the target data pod, using the source data pod and the target data pod as a data sender and a data receiver respectively, and transmitting the data disk data from the source data disk to the target data disk.

13. An electronic device, comprising:
at least one processor; and
a memory connected with the at least one processor communicatively;
wherein the memory stores instructions executable by the at least one processor to cause the at least one processor to perform the method according to any one of claims 1 to 7.

14. A non-transitory computer readable storage medium storing computer instructions for causing a computer to perform the method according to any one of claims 1 to 7.

15. A computer program product comprising a computer program/instruction which, when executed by a processor, implements the method according to any one of claims 1 to 7.
